# EUROPEAN PATENT APPLICATION

(11) **EP 1 047 226 A2**
(43) Date of publication of application: **25.10.2000**
(21) Application number: 00103639.1
(22) Date of filing: 21.02.2000
(51) Int. Cl.: H04L 12/56, H04L 12/24

(54) **Communication quality assurance type network system**

(30) Priority: 03.03.1999 JP 5508199; 02.08.1999 JP 21837699
(71) Applicant: Hitachi, Ltd., Chiyoda-ku, Tokyo 101-8010 (JP)
(72) Inventor: Miyake, Shigeru, Hitachi, Ltd. Intel. Prop. Group, Chiyoda-ku, Tokyo 100-8220 (JP); Takada, Osamu, Hitachi, Ltd. Intel. Prop. Group, Chiyoda-ku, Tokyo 100-8220 (JP); Ebata, Tomoichi, Hitachi, Ltd. Intel. Prop. Group, Chiyoda-ku, Tokyo 100-8220 (JP); Takihiro, Masaotoshi, Hitachi Ltd Intel Prop Group, Chiyoda-ku, Tokyo 100-8220 (JP); Koizumi, Minoru, Hitachi, Ltd. Intel. Prop. Group, Chiyoda-ku, Tokyo 100-8220 (JP); Hirata, Toshiaki, Hitachi, Ltd. Intel. Prop. Group, Chiyoda-ku, Tokyo 100-8220 (JP); Tsukada, Koji, Hitachi, Ltd. Intel. Prop. Group, Chiyoda-ku, Tokyo 100-8220 (JP); Kurosaki, Yoshiyuki, Hitachi Ltd. Intel Prop Group, Chiyoda-ku, Tokyo 100-8220 (JP)
(74) Representative: Strehl Schübel-Hopf & Partner

(57) **Abstract**

A network system including at least one end node (102) connected to a network and a policy server (104). The end node (102) issues a network resource reservation request. The policy server (104) stores therein a network resource operation policy and network resource usage status information and accepts the network resource reservation request issued by the end node. Then, based on the network resource reservation request and on the stored operation policy and usage status information, the policy server determines network resource reservation and issues to an associated network device a control instruction executing the determined network resource reservation.

## Description

### BACKGROUND OF THE INVENTION

The present invention relates to a quality management and control system for policy-based communication routes and to a management and control method for network communication routes for use in intra-corporate and inter-corporate data communication networks.

Today, the Internet Protocol (IP), a protocol widely used on the Internet, is popular in corporate data networks. The IP is also used in networks of carriers that provide a telephone service or an Internet connection service. The Internet Engineering Task Force (IETF), an international body for standardization, has proposed many protocols for conventional IP networks. These protocols include Resource Reservation Protocol (RSVP) and DiffServ. RSVP propagates a request onto routers on transmission path to reserve bandwidth-reserved transmission path to allow the end user to do communication reliably, and DiffServ changes the setting of reserved bandwidths. Also being drafted by IETF is a protocol, called COPS, which controls communication-line bandwidth reservation and so on between devices on a network and the network management system.

On the other hand, Simple Network Management Protocol (SNMP), defined by such publications as IETF-issued Request for Comment 1907 (RFC1907), is generally used as a method for managing devices on a network. This protocol allows the user to reference the setting status of each device and to change the setting of some devices.

However, in a network where conventional protocols, such as RSVP and DiffServ, are used, a control request is directly issued to the router from an end node. Therefore, a problem with conventional protocols is that the network manager cannot keep track of all control requests and, therefore, cannot manage the network resources based on the operation policy the network manager designed.

Another problem with conventional protocols is that it is impossible to verify, in advance, that the communication bandwidth required by the end node will be reserved. This is because conventional protocols reserve a communication bandwidth on the route as a control request is relayed from one router to another.

A still another problem with conventional protocols is that, when a control request is issued across a plurality of organizations, the operation policy of one organization cannot be applied to another. This makes it impossible for a plurality of organizations to reserve a quality-assured communication line among them.

### SUMMARY OF THE INVENTION

It is an object of the present invention to provide a network manager with means for managing network resources based on an operation policy, that is a policy related to an operation managed by a system manager.

It is another object of the present invention to provide an end node with means for verifying, in advance, whether or not a quality-assured communication route will be reserved and, as necessary, means for reserving control in advance.

It is still another object of the present invention to provide means for automatically adjusting the reservation of network resources according to the operation policy of each organization even when a control request is issued across a plurality of organizations.

To achieve the objects described above, the present invention provides a network system including at least one end node connected to a network and a policy server. The end node issues a network resource reservation request. The policy server stores therein a network resource operation policy and network resource usage status information and accepts the network resource reservation request issued by the end node. Then, based on the network resource reservation request and on the stored operation policy and usage status information, the policy server determines network resource reservation and issues to an associated network device a control instruction executing the determined network resource reservation.

There are two types of network resource reservation requests: a pre-reservation type resource reservation request requesting network resource reservation in future and an immediate type resource reservation request immediately requesting network resource reservation. When the policy server receives a pre-reservation type resource reservation request, it issues a control instruction to the network device at a time specified by the pre-reservation type resource reservation request. When the policy server receives an immediate type resource reservation request, it issues a control instruction to the network device immediately.

### BRIEF DESCRIPTION OF THE DRAWINGS

Fig. 1 is a diagram showing an example of a network according to the present invention and an example of information sent to a policy server.
FIG. 2 is a diagram showing the configuration of the policy server according to the present invention.
FIG. 3 is a diagram showing functional modules of the policy server and corresponding databases.
FIG. 4 is a diagram showing the functional modules of the policy server and the corresponding databases.
FIG. 5 is a diagram showing the outline of processing in which a network manager sets an operation policy in the policy server.
FIG. 6 is a diagram showing the outline of pre-reservation type resource reservation processing which is executed by the policy server in response to a request from a network user.
FIG. 7 is a diagram showing the outline of immediate type resource reservation processing which is executed by the policy server in response to a request from a network user.
FIG. 8 is a diagram showing the outline of resource reservation request processing which is executed by the policy server in response to a request from the policy server of an other organization.
FIG. 9 is a diagram showing the outline of network routes, via which information is exchanged among a plurality of organizations.
FIG. 10 is a diagram showing a link-to-boundary-router correspondence table.
FIG. 11 is a diagram showing an inter-organization link management table.
FIG. 12 is a diagram showing an example of contents of a policy object.

### DESCRIPTION OF THE EMBODIMENTS

### (1) Network system configuration

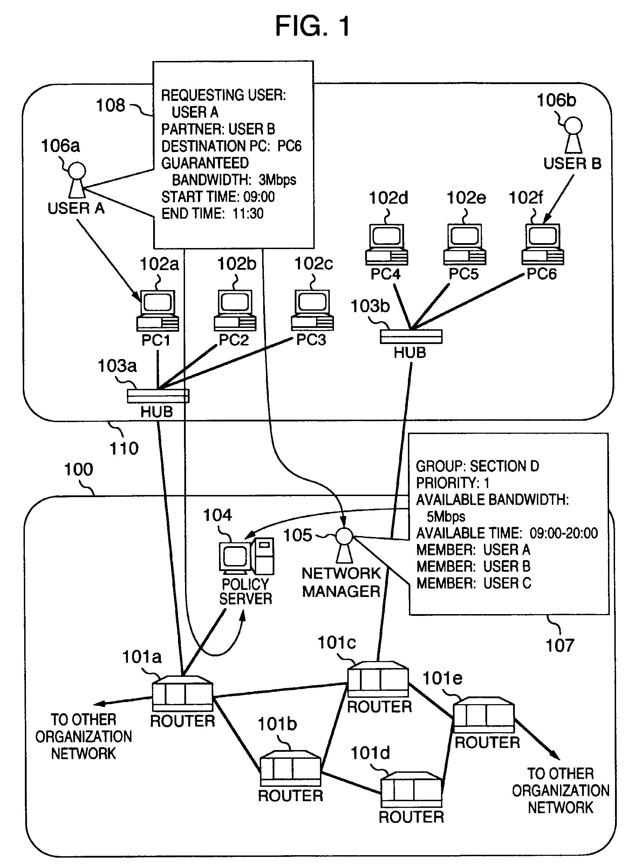

FIG. 1 is a diagram showing an example of a network and an example of information sent to a policy server.

The network system comprises a router network comprising a plurality of routers (101a-101e) and end node PCs (Personal Computers) (102a-102f) connected to the router network via hubs (103a-103b). A policy server (104), responsible for integrally managing and controlling the network resources of each router, is connected to this network. In general, a network manager (105) manages the operation status of a network (100) and, as necessary, changes the setting of the routers. In a network (110) comprising end nodes and hubs connecting the end nodes, users (106a-106b) in the end nodes of the network can change the setting of the hubs.

That is, the network shown in the figure comprises the network (100) operated by the network manager and the network (110) used by the end users.

The policy server (104) is connected physically to one of routers (101a in FIG. 1) in the network (100). The policy server (104) is connected logically to any router in the network (100). Communication between the policy server (104) and a router is performed via a protocol such as COPS (Common Open Policy Service) described above.

Although not shown in FIG. 1, a network management server may be included in the network for managing the devices on the network. The network management server uses the above-described Simple Network Management Protocol (SNMP) to manage network devices including routers and to manage topology information and route information on the network devices. The network management server and the policy server may exchange and share the route information and the topology information between them. These two servers may be implemented on one server.

In this network system, the network manager registers in the policy server, in advance, a description (107) describing the operation policy for network resource reservation.

The operation policy is composed of network management information required for managing each group, including information on group members, priority, resource reservation conditions, route limitations, and so on.

On the other hand, a resource reservation request from the user specifies the requesting user name, the PC identifier, conditions for the required resources, and so on (108). Resource reservation requests are classified into two types: pre-reservation type requests used to reserve, in advance, the resources that will be required in future and immediate type requests that are issued immediately according to the user's need.

All resource reservation requests are sent to the policy server. The policy server adjusts each request appropriately according to the operation policy and then sets it in the corresponding router via a resource reservation control instruction.

### (2) Policy server configuration

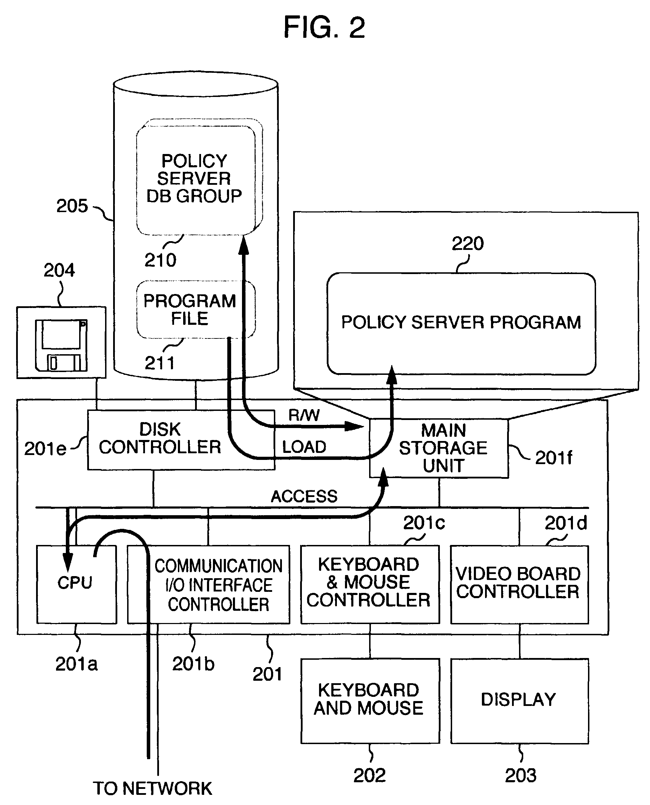

FIG. 2 is a diagram showing the configuration of the policy server. The policy server is implemented by a program which runs on a standard computer (201). The computer (201) comprises a central processing unit (201a), a communication I/O interface controller (201b), a keyboard and mouse controller (201c), a video board controller (201d), a disk controller (201e), and a main storage unit (201f). A keyboard and mouse (202), a display (203), a portable external storage medium (204), and a hard disk (205) are connected to the computer (201). A policy server database group (210) and a policy server program (211) have been installed on the hard disk (205) from the portable external storage medium (204) or via the network to which the policy server is connected. The policy server is implemented when the program is read into the main storage unit (201f) for execution.

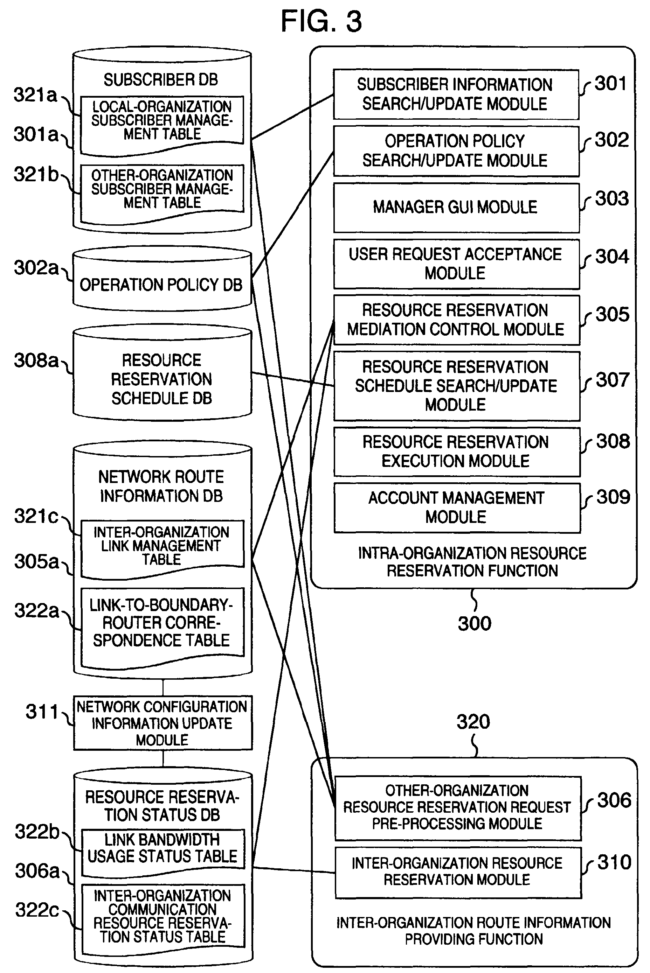

FIG. 3 is a diagram showing the functional modules constituting the policy server and the corresponding databases.

The functions of the policy server are implemented when the processor executes the program in the hardware configuration described above.

In the embodiment, a network that is operating under an operation policy is defined as an organization. Therefore, the policy server is composed of two types of functions. One is an intra-organization resource reservation function (300) which adjusts resource reservation within the local organization. The other is an inter-organization route information providing function (320) which informs other organizations of information on a part of the operation policy of the local organization when it is necessary to reserve communication routes to other organizations.

The intra-organization resource reservation function (300) comprises the following functional modules and databases: a subscriber information search/update module (301) and a subscriber database (301a) provided for information on the users of the local organization; an operation policy search/update module (302) and an operation policy database (302a) provided for information described by the network manager as an operation policy; a manager GUI module (303) which allows the network manager to enter, update, and maintain various settings; a user request acceptance module (304) which accepts network resource reservation requests, both pre-reservation type and immediate type, from the user; a resource reservation mediation control module (305) which mediates an individual resource reservation request according to the operation policy for controlling resource reservation; a network route information database (305a) for storing information to be used for mediation control processing; and a resource reservation status database (306a), and uses an other-organization resource reservation request pre-processing module (306) which pre-processes a resource reservation request that is issued to some other organization.

The intra-organization resource reservation function (300) further comprises a resource reservation schedule search/update module (307) and a resource reservation schedule database (308a) which process and store the setting of a mediated pre-reservation type network resource reservation request; a resource reservation execution module (308) which issues to a router a control instruction specifying the setting of a pre-reservation type network resource reservation request whose reservation date has arrived and an immediate type network resource reservation request which has been mediated; an account management module (309) which performs account processing when the reserved resource is charged; and a network configuration information update module (311) which regularly checks the contents of the network route information database (305a) and a resource reservation status database (306a) and updates them as necessary.

The inter-organization route information providing function (320) comprises two modules: other-organization resource reservation request pre-processing module (306) and inter-organization resource reservation module (310). The other-organization resource reservation request pre-processing module (306) pre-processes a resource reservation request that will be issued to an other organization. The inter-organization resource reservation module (310) exchanges organization information with other organizations that is necessary for inter-organization communication, references the exchanged information, and sends or receives a network resource reservation request to or from other organizations for inter-organization communication.

A local-organization subscriber management table (321a) contains information on the organizations to which the subscribers in the local organization are allowed to connect and which service they are allowed to use when connecting to those organizations. An other-organization subscriber management table (321b) contains information on the organizations to which the other organization users belong and on the services they can use to connect to this local organization. An inter-organization link management table (321c) contains information on link connection among organizations and desired relations between services and links.

A link-to-boundary-router correspondence table (322a) contains information on which router in the local organization and which router in an other organization form each of the links. A link bandwidth usage status table (322b) contains information on the maximum bandwidth available for the link and the amount of bandwidth currently used. An inter-organization communication resource reservation status table (322c) contains information on the current status of the inter-organization resource reservation.

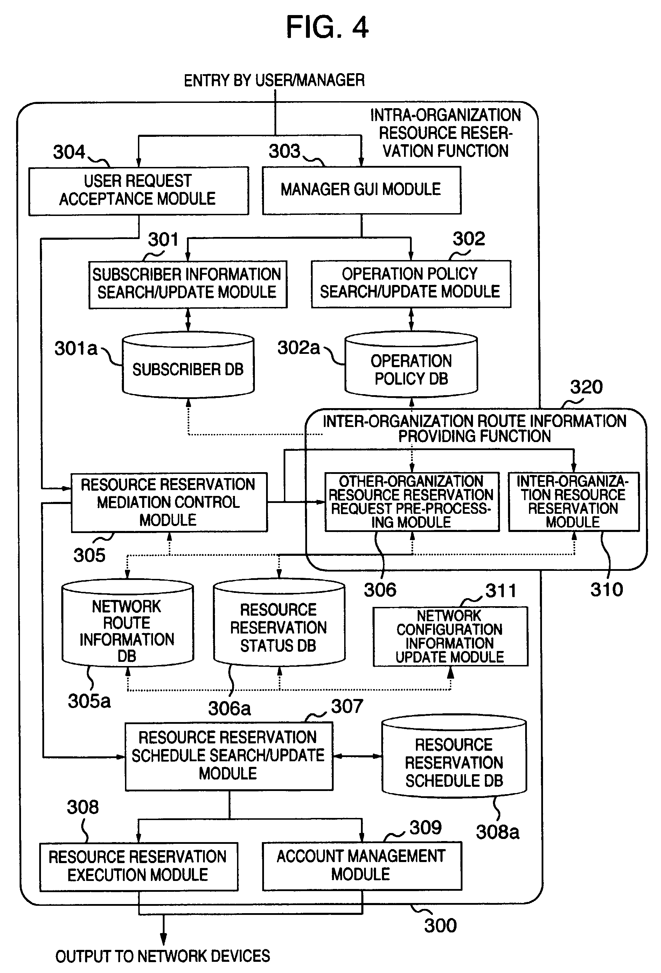

FIG. 4 is a diagram showing the relation among the functions and databases shown in FIG. 3 and how those functions access data. In the figure, solid lines indicate the flow of processing, and broken lines indicate which function accesses which data.

### (3) Operation policy setting

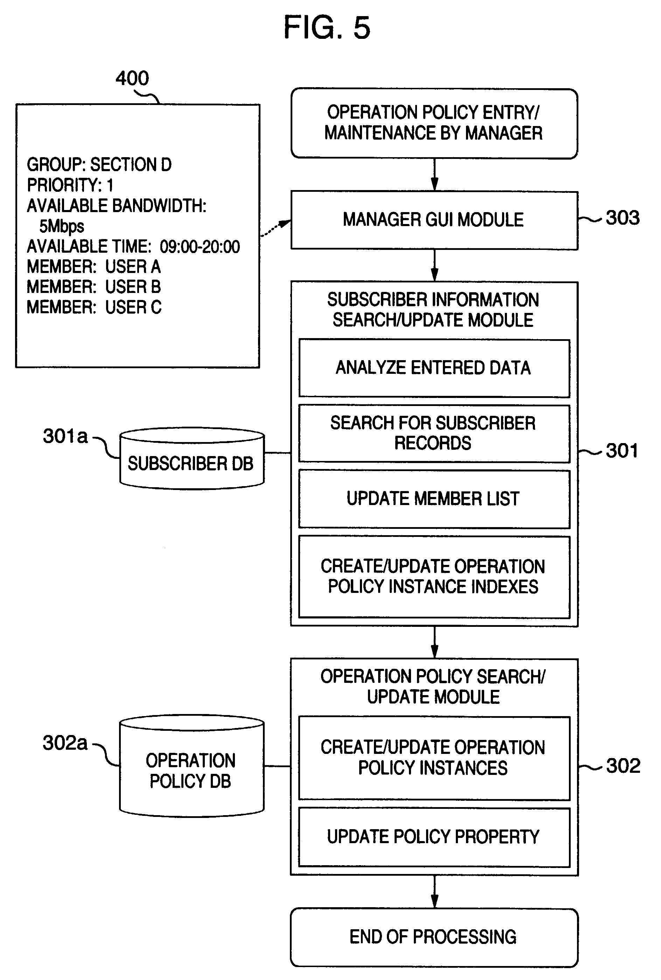

FIG. 5 is a diagram showing the outline of processing executed when the network manager sets an operation policy in the policy server. To allow the manager to enter or maintain an operation policy, the manager Graphical User Interface (GUI) module (303) first displays a GUI input/output screen. Policy information (400) the network manager enters on this screen applies to all users belonging to a division, for example, all users belonging to a section named section D.

Next, based on the information entered by the network manager via the GUI screen, the subscriber information search/update module (301) searches the subscriber database (301a) for subscriber information for which the operation policy is to be set or updates the subscriber information. The subscriber information search/update module (301) is subdivided into the following functions: entry data analyzing function which analyzes and classifies entered data, the subscriber record search function which searches the subscriber database for records, the member list update function which updates subscriber information according to the information entered by the manager, and the operation policy instance index creation/update function which creates and updates index information to be used for searching for operation policy object instances into which entered data is stored.

The operation policy search/update module (302) comprises two functions: the operation policy instance creation/update function which creates or updates the instance of an operation policy object for each member and the policy property update function which stores, for each member, network resource usage limitation information and so on into the operation policy object as property information. The operation policy instance creation/update function converts entered operation policy information into the instance of an operation policy object for each member. The policy property update function stores an operation policy, including information on network resource usage limitation on each member, into an operation policy object as the operation policy object property information. The function then stores the policy object information into the operation policy database (302a).

### (4) Pre-reservation type resource reservation

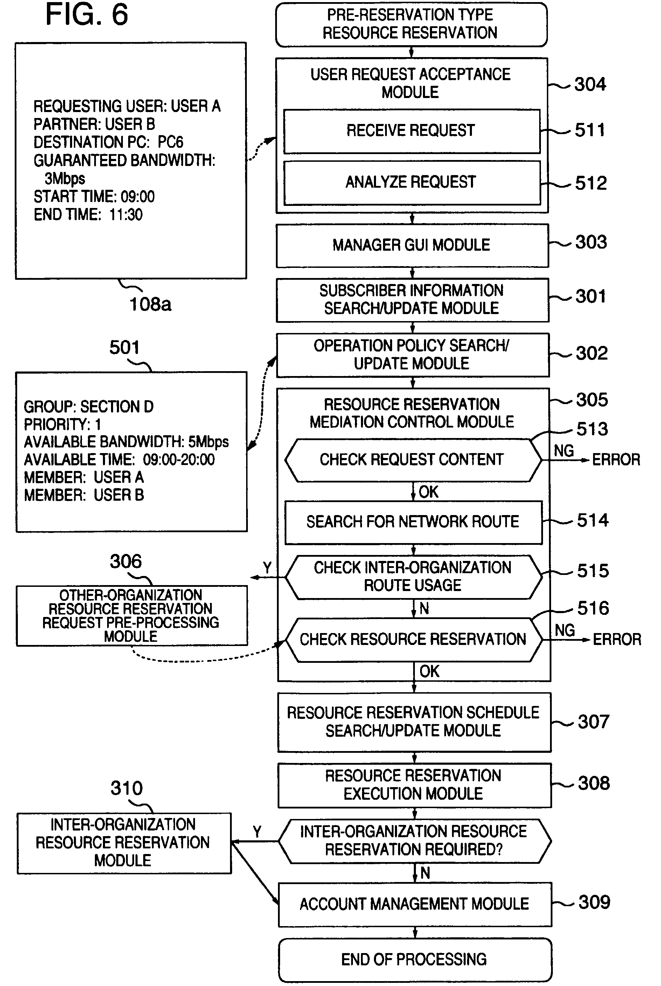

A pre-reservation type resource reservation request is sent to the policy server as a resource reservation request whose communication start time and communication end time are specified by the user as a date or a period of time. The request is sent from the user's end node to the policy server by an existing protocol or a command. Or, the network manager may enter this request into the policy server as a command or an instruction in response to a required condition sent from the user via a telephone or electronic mail. Upon accepting this request, the policy server starts pre-reservation type resource reservation. Referring to FIG. 6, this processing will be described.

The user request acceptance module (304) is executed first. A request receiving function (511) of this module receives a user request, shown as a pre-reservation type network resource reservation request (108a), specifying the resource reservation requesting user, both ends requesting the resource, resource reservation content, and resource reservation period. Then, a request content analyzing function (512) of the user request acceptance module (304) classifies and analyzes the received request.

Next, the subscriber information search/update module (301) searches the subscriber database (301a) for the user information, identifies the request sending user, and checks the operation policy of the user.

When the network manager receives the request, not via the network, but directly from the user, the network manager enters the user request via the manager GUI module (303). The network manager also uses the manager GUI module (303) when he or she performs setup processing in response to a reservation request for individual resources.

Next, to check the resource reservation request sent from the user, the operation policy search/update module (302) searches the operation policy database (302a) for the content of the operation policy of the request-sending user using the request-sending user as the key. The search result is the operation policy information such as the one shown in the result (501). This is obtained by searching the operation policy database for the user.

Next, the resource reservation mediation control module (305) performs processing described below.

A request content checking function (513) of this module searches the resource reservation status database (306a) for the resource status of the network. The function then compares the pre-reservation type network resource reservation request (108a) from the user with content of the operation policy of the user obtained from the already-defined operation policy (501).

For a request satisfying the conditions defined in the operation policy, a network route search function (514) searches the network route information database (305a) for the network route to be used for resource reservation to check to see if the requested resource may be reserved.

Based on the information included in the inter-organization link management table (321c) containing information on the routes for connection with other organizations, an inter-organization route usage checking function (515) checks the route, obtained as a result of the search, to see if the route is completely included in the organization and if it is necessary to send the request to other organizations.

A resource reservation checking function (516) determines the routes on which network resources are to be reserved and which resources are to be actually reserved. Upon recognizing a need to use a route in an other organization, the inter-organization route usage checking function (515) passes control to the other-organization resource reservation request pre-processing module (306) to form a resource reservation request message to be sent to the other organization. Communication with the other organization is performed between the policy server of the local organization and the policy server of the other organization via a protocol such as COPS.

If the result of checking is negative in step 513 or 516, the resource reservation module informs the network manager or the end node that the request has been rejected.

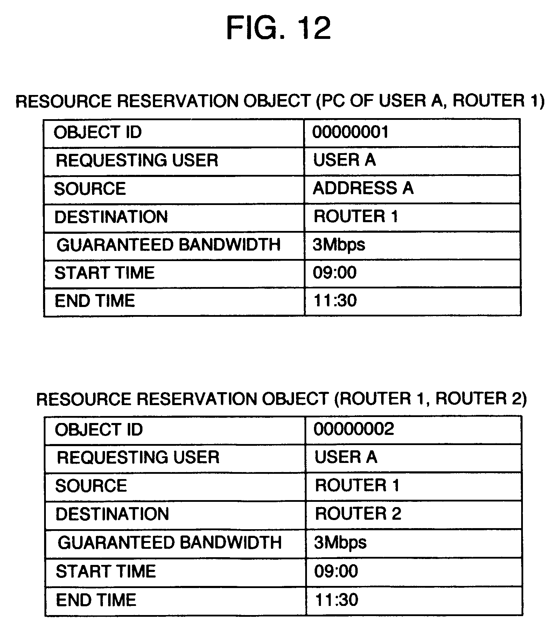

The resource reservation schedule search/update module (307) converts the finally determined resource reservation setting to a policy object that is a form executable by the resource reservation function and registers it. FIG. 12 shows an example of the policy object.

Then, the resource reservation execution module (308) interprets the registered policy object according to the resource reservation schedule within the organization and sends a resource reservation control command to all routers on the route described in the policy object using a protocol such as SNMP and COPS. In addition, when the other-organization resource reservation request pre-processing module (306) was executed, the inter-organization resource reservation module (310) is executed. The router which receives the control command described above sets up the network route and reserves the resources.

### (5) Immediate type resource reservation

An immediate type resource reservation request is sent from a user terminal (end node) to a router via an existing protocol such as RSVP. Upon receiving this request, the router does not forward it to the next router but instead transfers it to the policy server. The policy server makes adjustment according to the operation policy in the same way as the pre-reservation type request and asks the routers on the routes to reserve the required bandwidth. The policy server informs the user terminal, via the existing protocol such as RSVP, whether or not the bandwidth has been reserved.

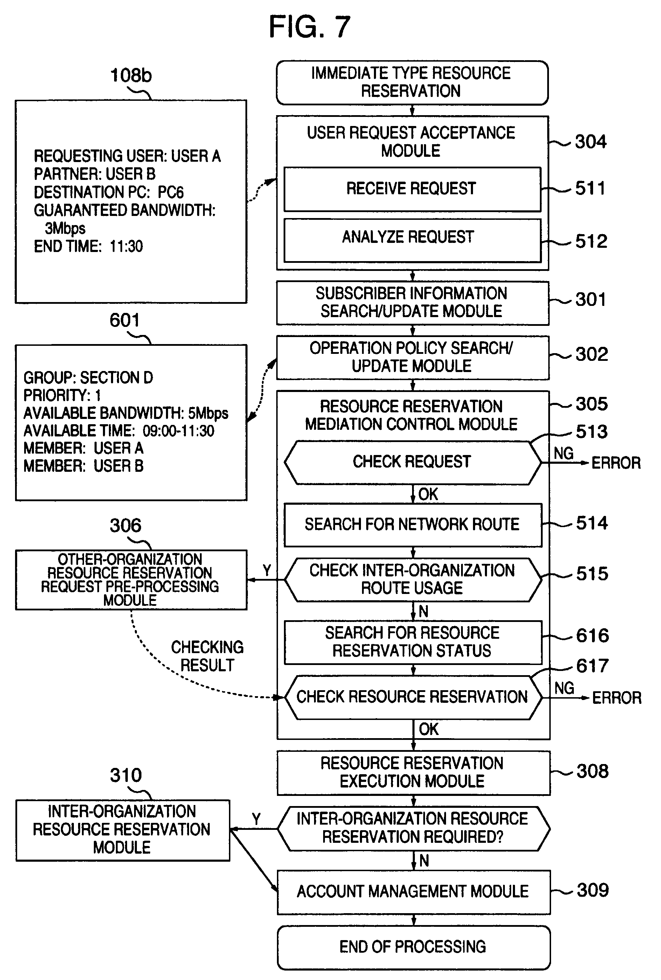

FIG. 7 is a diagram showing the outline of immediate type resource reservation processing described above. Similarly to the pre-reservation type resource reservation processing, the immediate type resource reservation processing is started when a network resource reservation request is received from the user. This request includes a resource reservation request specifying the reservation of resources from the current time to a particular point in time in future. The user request acceptance module (304) processes an immediate type network resource reservation request (108b), shown in FIG. 7, in the same manner as in FIG. 6. The subscriber information search/update module (301) and the operation policy search/update module (302) perform processing in the same manner as in FIG. 6.

The search result is operation policy information (601) such as the one shown in the example. This is obtained by searching the operation policy database, shown in the figure, for the user using the request-sending user and the current time as the key. The resource reservation mediation control module (305) checks the already-defined operation policy (601) to see if the resource reservation request (108b) from the user may be accepted. For a request satisfying the conditions defined in the operation policy, the resource reservation mediation control module (305) examines the current network resource status and the routes on which the resources are to be reserved to check to see if the requested resources may be reserved. It then determines the routes on which network resources are to be reserved and the resources to be actually reserved. The request content checking function (513), network route search function (514), and inter-organization route usage checking function (515) of the resource reservation mediation control module (305) are the same as those shown in FIG. 6.

A resource reservation status search function (616) references information collected by the network management system and so on to search for the current resource reservation status. Then, the resource reservation checking function (617) determines the routes on which network resources are to be reserved and the resources to be actually reserved. The other-organization resource reservation request pre-processing module (306) and the resource reservation execution module (308) perform the same processing as in FIG. 6. In addition, when the other-organization resource reservation request pre-processing module (306) was executed, the inter-organization resource reservation module (310) is executed. The processing executed by this module is the same as that described in FIG. 6.

Finally, the account management module (309) calculates the charge for the immediate type resource reservation request and registers the result. For a pre-reservation type request, the resource reservation charge may be calculated using registered schedules and the execution results. However, for an immediate type resource reservation request, the charge must be calculated at this time because the charge is calculated for the resources that have been actually reserved.

### (6) Resource reservation request from a other organization

In resource reservation processing shown in FIGS. 6 and 7, a resource reservation request is issued, as necessary, to the policy server of an other organization.

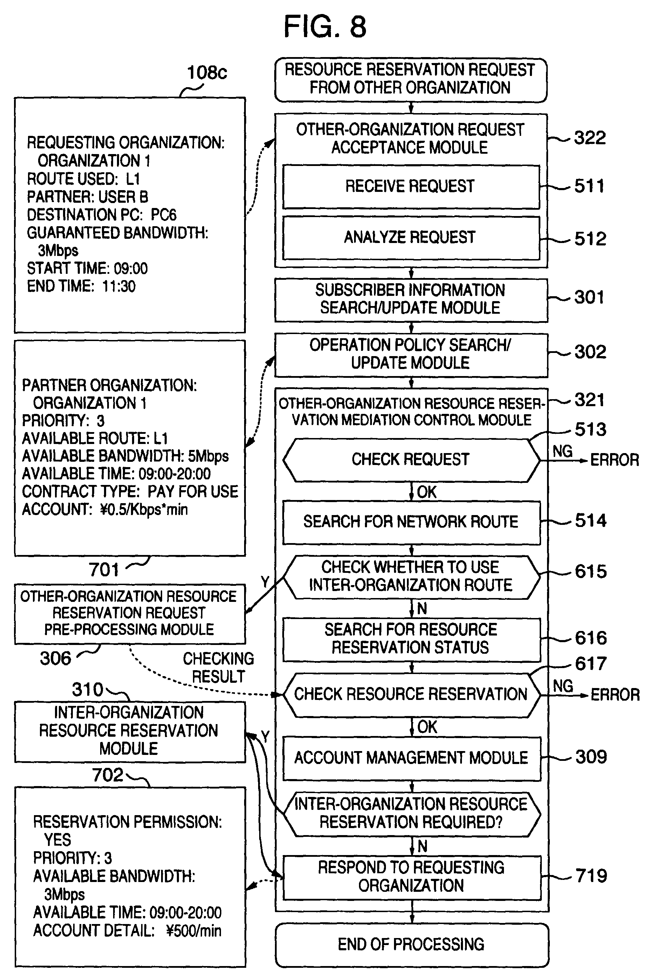

FIG. 8 is a diagram showing the outline of processing of a resource reservation request received from the policy server of an other organization. A resource reservation request received from the other organization is processed in the same manner as it is received from within the local organization. That is, the request is checked with the content of the operation policy to determine the resources to be reserved. However, processing for a request received from within the local organization and processing for a request received from an other organization differ in that a part of information on the request-sending organization is hidden because the request sending organization and the request receiving organization are different. Processing for a resource reservation request received from a other organization is started when the request is received from the other organization.

The request content receiving function (511) of an other-organization request acceptance module (322), which is executed first, receives a request, shown in a network resource reservation request (108), from an other organization and disassembles the request. The request content analyzing function (512) then classifies and analyzes the content. It should be noted that, for a resource reservation request from the other organization, the issuer of the request is the organization which has sent the request. This processing is effective when user information is not shared among different organizations.

The subscriber information search/update module (301) and the operation policy search/update module (302) perform the same processing as in FIGS. 6 and 7. The search result is operation policy information (701) such as the one shown in the figure. This is obtained by searching the operation policy database for the corresponding organization.

A other-organization resource reservation mediation control module (321) checks the resource reservation request (108c) from the other organization with the search result (701) obtained by searching the operation policy which is prepared, in advance, for other organizations. For a request satisfying the conditions defined in the operation policy, the other-organization resource reservation mediation control module (321) examines the current status of the network resources to be used for resource reservation and the routes on which the resources are to be reserved to check to see if the requested resources may be reserved. Then, the module determines the routes on which network resources are to be reserved and the resources to be actually reserved.

The request content checking function (513), network route search function (514), inter-organization route usage checking function (615), resource reservation status search function (616), and resource reservation checking function (617) of the other-organization resource reservation mediation control module (321) perform the same processing described in FIG. 7.

Then, the account management module (309) calculates the charge for the resources that have been reserved and sends back the calculated charge to the requesting organization (719). The other-organization resource reservation request pre-processing module (306) performs processing described in FIGS. 6 and 7. In addition, when the other-organization resource reservation request pre-processing module (306) was executed, the inter-organization resource reservation module (310) is executed. The processing executed by this module is the same as that described in FIG. 6.

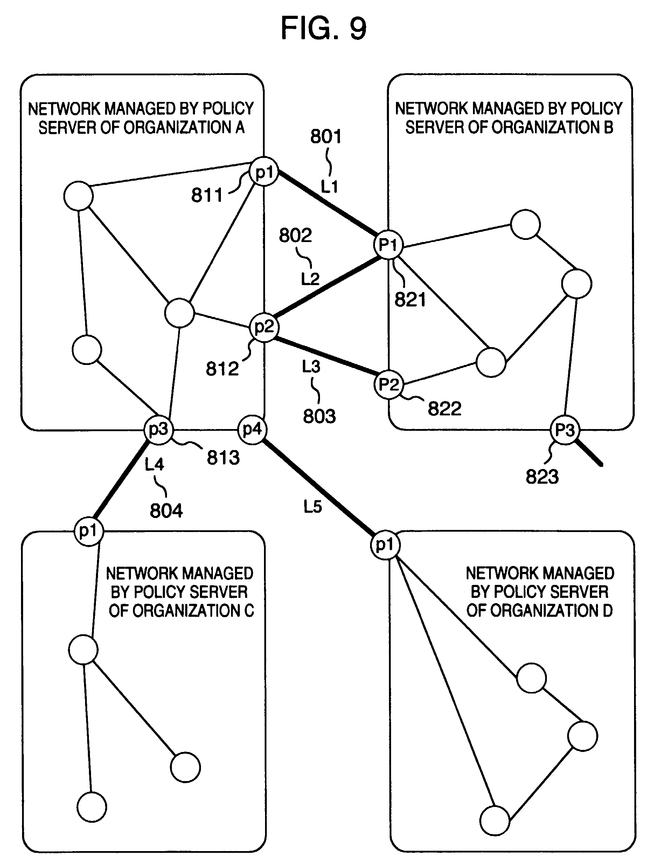

FIG. 9 is a diagram showing the outline of network routes via which information is exchanged among a plurality of organization in this embodiment.

In this embodiment, an organization is defined as an area (domain) with a partial network operating under its own operation policy. Therefore, the whole network is composed of a plurality of policy domains (networks), each having its own operation policy and each connected to others. The positions of the connection parts between organizations should be strictly defined, and the operation policy at each connection part must be agreed on by the both organizations. The example in the figure shows the connection among organization A, organization B, organization C, and organization D. The intra-organization and inter-organization subscriber management tables are made accessible and exchanged between organizations irregularly.

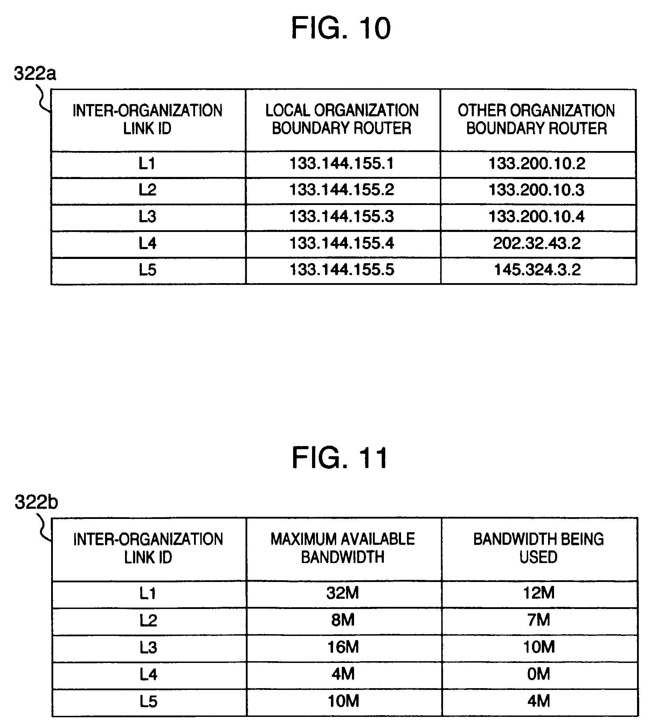

The policy server manager creates inter-organization physical network route information, for example, the link-to-boundary-router correspondence table such as the one shown in FIG. 10 and the inter-organization link management table such as the one shown in FIG. 11.

As shown in the link-to-boundary-router correspondence table in FIG. 10, the information shared between organizations includes information on the routes connecting the organizations, but not information on the connection points belonging to each organization. Therefore, when the policy server of organization A receives a resource reservation request requiring a connection to organization B, it checks the routes between organizations A and B with the resource reservation request from the user. That is, the policy server checks routes L1 (801), L2 (802), L3 (803), and a route via other organization(s) to determine the route satisfying the resource reservation request for organization B. Similarly, when the policy server of organization B receives a resource reservation request requiring a connection to some other organization, the policy server checks L1 (801), L2 (802), L3 (803), and a route via some other organizations to select one of them.

If it is determined that route L2 is selected for connection from organization A to organization B and a resource reservation request for route L2 is issued, the policy server of organization A processes, within organization A, the resource reservation request which was issued from the user. That is, the policy server processes the request as a resource reservation request for the resources between the end node of the requesting user and the connection point P2 (812) of routes L2 and L3 belonging to organization A.

### (7) Modifications

There are several types of routers, and many types of information may be controlled externally. In the embodiment, the policy server sends a routing and bandwidth reservation instruction to the associated router. However, for a router performing a static routing, in which the route is not controllable externally, the policy server sends only a bandwidth reservation instruction to the associated router. Characteristic information on those routers may be stored in the network route information database.

In the embodiment, many methods for sending a resource reservation request from the user to the policy server. Other methods may also be used. An immediate type resource reservation request may also be sent from the user terminal directly to the policy server.

## Claims

1. A network system comprising:
at least one end node (102) connected to a network and having means for issuing a network resource reservation request; and
a policy server (104) connected to the network comprising:
means (210) for storing therein a network resource operation policy and network resource usage status information;
means (304) for accepting said network resource reservation request issued by the end node;
means (305) for determining network resource reservation, based on said network resource reservation request and on the stored operation policy and usage status information, and for storing the determined network resource reservation; and
means (308) for issuing to an associated network device a control instruction executing the determined network resource reservation.

2. The network system according to claim 1, wherein
said network resource reservation request is a pre-reservation type resource reservation request requesting the network resource reservation in future and
said policy server (104) issues the control instruction to the network device at a time specified by the pre-reservation type resource reservation request.

3. The network system according to claim 1, wherein
said network resource reservation request is an immediate type resource reservation request immediately requesting the network resource reservation, and
said policy server (104) issues the control instruction to the network device immediately.

4. The network system according to claim 1, wherein
said means (305) for determining the network resource reservation in said policy server (104) determines a bandwidth to be reserved and
said means (308) for issuing the control instruction issues the control instruction reserving the bandwidth.

5. The network system according to claim 1, wherein
said means (305) for determining the network resource reservation in said policy server (104) determines a route and a bandwidth to be reserved and
said means (308) for issuing the control instruction issues to the network device on the determined route the control instruction reserving the route and the bandwidth.

6. The network system according to claim 1, wherein
said network includes a plurality of sub-networks each managed by the policy server (104) and,
when said network resource reservation request that has been received is associated with the sub-network managed by an other policy server, the policy server further comprises means (320) for issuing the network resource reservation request to the other policy server.

7. A network resource reservation method, comprising the steps of:
storing a network resource operation policy and network resource usage status information;
accepting a network resource reservation request issued by an end node connected to a network;
determining network resource reservation, based on said network resource reservation request and on the stored operation policy and usage status information, and storing the determined network resource reservation; and
issuing to an associated network device a control instruction executing the determined network resource reservation.

8. The network resource reservation method according to claim 7, further comprising the step of:
when said network resource reservation request does not follow the stored operation policy or when the requested network resources cannot be reserved, informing the end node issuing the network resource reservation request that the network resource reservation request is rejected.

9. A policy server connected to a network and performing network resource reservation and management, comprising:
means (210) for storing a network resource operation policy and network resource usage status information;
means (304) for accepting a network resource reservation request issued by an end node connected to a network;
means (305) for determining network resource reservation, based on said network resource reservation request and on the stored operation policy and usage status information, and for storing the determined network resource reservation; and
means (308) for issuing to an associated network device a control instruction executing the determined network resource reservation.

10. The policy server (104) according to claim 9, wherein
when a pre-reservation type resource reservation request requesting the network resource reservation in future is received, the policy server issues the control instruction to the network device at a time specified by the request.

11. The policy server according to claim 9, wherein
when an immediate type resource reservation request immediately requesting the network resource reservation is received, said policy server issues the control instruction to the network device immediately.

12. A network resource reservation program causing a computer system to:
store a network resource operation policy and network resource usage status information;
accept a network resource reservation request issued by an end node connected to a network;
determine network resource reservation, based on said network resource reservation request and on the stored operation policy and usage status information, and to store the determined network resource reservation; and
issue to an associated network device a control instruction executing the determined network resource reservation.
